# DEMANDE DE BREVET EUROPEEN

(11) **EP 0 641 642 A2**
(43) Date de publication de la demande: **08.03.1995**
(21) Numéro de dépôt: 94400478.7
(22) Date de dépôt: 07.03.1994
(51) Int. Cl.: B29C 67/18, B29C 67/14, B63B 5/24

(54) **Procédé de construction de panneaux composites, en particulier de coques de bateaux**

(30) Priorité: 08.03.1993 FR 9302740
(71) Demandeur: KOWEX SARL, F-45000 Orléans (FR)
(72) Inventeur: Kowalczyk, Olivier Felix, F-74200 Margencel (FR)

(57) **Abrégé**

Ce procédé de construction de panneaux non-développables en lattes de matériau dur, par exemple des lattes de bois, met en oeuvre un mannequin rigide (3) sur lequel est monté un lattage (8), et un moule rigide (10) sur lequel est réalisée une stratification de résine et de fibres de verre, ce moule (10) avec sa stratification étant posé sur le lattage après encollage, ce collage se faisant sous vide d'air ou au contact, le panneau fini ayant une stratification sur l'une de ses surfaces et un lattage apparent sur l'autre.

## Description

La présente invention concerne un procédé de construction de panneaux composites, constitués d'un lattage et d'une stratification à base de résine.

Par lattage, on entend un ensemble de lattes de matériau dur, en particulier de bois, mais aussi de métal ou analogue. Par matériau dur, on n'exclut pas toutefois que le matériau, au moins sous certaines formes telles que des lattes, puisse présenter une certaine souplesse : c'est le cas par exemple des lattes de bois qui, bien que dures, peuvent néanmoins ployer plus ou moins.

Les panneaux plans en matériaux durs peuvent être construits relativement facilement, sans qu'il soit besoin de lattage. En revanche, les panneaux gauches, et plus encore les panneaux non-développables, en matériau dur, et en particulier de bois, offrent des difficultés de construction qui freinent leur développement malgré les applications qu'ils trouvent, mettant en valeur leur résistance mécanique ou leurs qualités esthétiques : bateaux, véhicules terrestres, aéronefs, cloisons, meubles, rayonnages, piscines, etc. Pour réaliser une telle surface gauche, on sait qu'on peut découper préalablement le matériau en éléments (lattes, carreaux), suffisamment petits pour former une surface "lisse" tridimensionnelle. La finition d'une telle surface implique un ponçage et la pose d'un revêtement lisse, transparent si l'on désire conserver la visibilité d'un matériau (vernis, par exemple).

La fabrication traditionnelle des coques de bateau fournit un exemple des difficultés rencontrées.

Une coque de bateau est une structure requérant une grande résistance générale et, de préférence, un aspect agréable. La construction d'une coque unitaire passe d'abord par la fabrication d'un mannequin, structure définissant la forme tridimensionnelle de la coque. Sur celui-ci est ensuite posé un matériau formant la coque (ex : bois en planches ou lattes, plaques métalliques ...). Quel que soit le matériau choisi, la finition extérieure de la coque représente une partie importante de l'effort - et donc du coût - total. En effet, afin d'obtenir une surface parfaitement lisse, il faut généralement appliquer plusieurs couches de produits lissants, tels que le mastic époxy, et poncer répétitivement, pour finir par plusieurs couches de peinture.

C'est la raison principale pour laquelle la plus grande partie des constructions de bateaux de plaisance est réalisée selon un autre procédé permettant d'éliminer cette phase coûteuse de finition, ou de "carrossage". Ce procédé, conçu pour une production en série, met en oeuvre un moule femelle rigide dont la surface intérieure définit la forme de la surface extérieure de la coque finie. Ce moule, en particulier sa surface intérieure, est réalisé avec le plus grand soin. Cette surface, parfaitement polie et dépoussiérée est d'abord enduite d'un agent démoulant, produit facilitant l'extraction ultérieure de la coque finie du moule. Ensuite, le moule reçoit une couche de "gel-coat", une résine chargée et pigmentée qui formera la surface externe de la coque. Cette couche peut être teintée selon la couleur finale de la coque. Sur cette couche sont ensuite posées des couches de la même nature que le gel-coat, afin de constituer l'épaisseur de coque requise. Cette résine est renforcée de fibres de grande résistance en traction, généralement des fibres de verre, parfois de kevlar ou de carbone. L'orientation, I'épaisseur et la densité de ces fibres, ainsi que le rapport de poids résine/fibre, sont des paramètres à choisir en fonction de l'application, bien connus des professionnels de l'art. L'application de cette couche "stratifiée" résine/fibre peut se faire avantageusement sous vide d'air ce qui permet d'optimiser le rapport entre la résistance générale et le poids en modulant la dépression atmosphérique de la "poche à vide".

Une fois les résines polymérisées, la coque est retirée du moule. Une telle coque possède généralement peu de rigidité intrinsèque et doit être rigidifiée par adjonction de raidisseurs. En contrepartie, sa surface externe est parfaite. Ce procédé peut également servir à la fabrication rapide et relativement peu coûteuse d'autres éléments tels que le pont, le rouf, et les meubles intérieurs. Par ailleurs, il est largement appliqué pour la fabrication de produits en dehors du contexte nautique (ex : bâtiment, meubles, automobiles, aviation...).

Il est évident que ce procédé ne convient pas à l'utilisation de matériaux en forme de panneaux solides (ex : bois, métal) ; en effet, compte tenu de la forme non-développable de la surface à réaliser, un panneau massif - même s'il est souple - doit être découpé en petits éléments pour se conformer à la surface tridimensionnelle. Par ailleurs, pour assurer une finition externe parfaite, il sera nécessaire dans tous les cas que la couche externe soit constituée d'un produit initialement liquide ou plastique qui se conformera parfaitement au moule.

Une méthode connue fait appel à des panneaux prédécoupés en forme de petits carreaux de quelques centimètres de largeur. Ces panneaux peuvent être ainsi plaqués et collés contre la surface intérieure stratifiée de la coque. Des panneaux de mousse thermoplastique peuvent être employés de la même façon, la mousse étant chauffée afin de se conformer à la surface intérieure stratifiée de la coque. En collant une deuxième stratification sur ce matériau, on constitue un "sandwich" dont la rigidité est sensiblement supérieure à celle d'une coque en stratifiée simple. La caractéristique essentielle de l'âme du sandwich est d'être légère mais incompressible (ex : mousse PVC, balsa "bois debout", etc). Toutefois cette structure présente quelques inconvénients, notamment le décollage de l'âme du stratifié sous des contraintes excessives, ce qui l'affaiblit très fortement, phénomène d'autant plus dangereux qu'il reste invisible.

Par ailleurs, le brevet français n° 8708779 fait connaître un procédé de construction de coques en bois latté stratifié sur mannequin, dans lequel l'accent est surtout mis sur la forme particulière des lattes.

A ce jour, il semble qu'aucune coque à base de lattes de matériau dur n'ait été réalisé en moule, ce qui pourtant devrait autoriser une construction plus rapide et industrielle.

L'objet de l'invention est de proposer un procédé de moulage adapté à la construction des panneaux composites.

Selon l'invention, le procédé de construction des panneaux composites, notamment gauches et particulièrement non-développables, constitués d'un lattage et d'une stratification à base de résine, est caractérisé en ce qu'on utilise un moule en deux parties complémentaires, on dispose le lattage sur la première partie, on dispose la stratification sur la seconde partie, on encolle au moins l'une des parties, et l'on presse une partie sur l'autre sous vide d'air.

Dans une forme de réalisation préférée, on forme le vide d'air entre d'une part une des deux parties du moule et d'autre part un film étanche couvrant l'autre partie du moule, le film étant raccordé de façon étanche aux bords de la partie du moule première nommée. Une telle forme de réalisation est particulièrement intéressante car elle permet de réaliser la première partie du moule, celle qui supporte le lattage, de façon assez sommaire, notamment sous forme de simple mannequin sur lequel on peut monter sommairement les lattes.

Il est avantageux que le lattage soit monté de manière relativement souple sur le premier moule, par exemple au moyen d'un agrafage sommaire sur des supports rigides, ou au moyen d'un agrafage rigide sur des supports souples ou relativement souples. Ceci permet aux lattes, lors de la mise sous vide, de trouver spontanément une place correcte grâce à la relative liberté de déplacement qui subsiste.

Le procédé trouve son application préférée dans la construction de coques de bateaux, et permet de bénéficier des avantages économiques de la construction sur moule, assurant une finition externe parfaite (gel-coat), avec le matériau de lattes apparent à l'intérieur de la coque.

Selon un mode préféré de réalisation, une première coque est construite sur une première partie du moule, ou mannequin. La surface de celle-ci est lissée avec le plus grand soin, puis une seconde partie du moule, ou moule femelle stratifié est réalisée à partir de cette surface. Par la suite, celles-ci sont montées de façon quasiment identique à celle de la première coque. Le collage de la structure se fait en la "plaquant" sur la surface intérieure du moule femelle sous vide d'air. Le mannequin sert à donner, le plus précisément possible, la forme du bordé de la coque de sorte que ce bordé épouse au plus près la surface intérieure du moule femelle. Pendant le collage de la structure, c'est le moule femelle seul qui détermine la forme de la coque.

D'autres caractéristiques et avantages de l'invention ressortiront de la description suivante. On se réfère à la figure unique annexée représentant en perspective éclatée et avec arrachement partiel un moule en deux parties conforme à l'invention.

On décrira d'abord la construction du moule femelle (seconde partie du moule) à partir du moule mâle (première partie du moule), en se reportant à la figure.

La fabrication du moule femelle 10, dont la forme intérieure définira la surface extérieure de la coque finie, est réalisée de la façon suivante. Une première coque est fabriquée sur un moule mâle ou mannequin 3 (partie basse de la figure) comprenant une série de gabarits 1, définissant les sections le long de la coque et reliés par des lisses 2. Dans le cas de l'invention, ce mannequin 3 sera réutilisé pour la fabrication de chaque coque en série. Pour cette raison les lisses 2 sont nombreuses et jointives, collées entre elles et fixées solidement sur les bords des gabarits, formant ainsi une surface continue. Ce mannequin possède une grande rigidité permettant sa manutention sans risque de déformation.

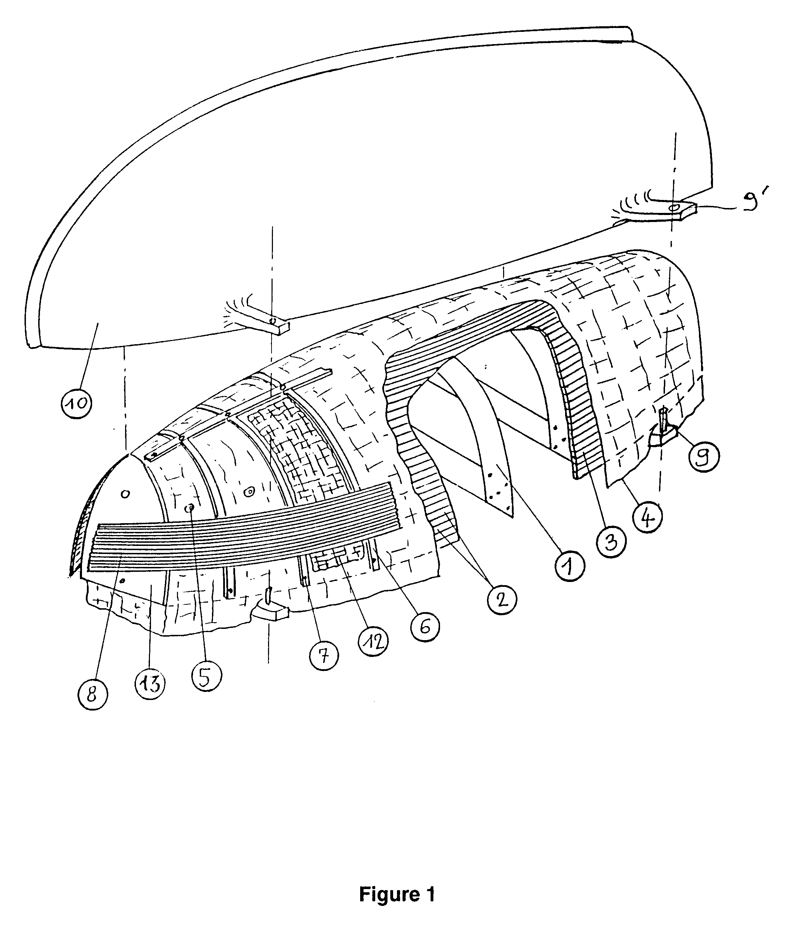

Ce mannequin 3 est ensuite recouvert d'un film ou poche de matériau étanche et élastique 4 qui constitue une des surfaces intérieures de la poche à vide. Ce film comporte plusieurs trous 5 communiquant de façon étanche avec des pénétrations de la surface du mannequin. Ensuite des lattes ou bandes de caoutchouc 6 (trois seulement sont représentées la figure 1), dont l'utilité sera décrite ci-dessous, sont posées sur le mannequin 3. Ces bandes élastiques sont ancrées à chaque extrémité par un simple ergot 7 planté de façon étanche dans le mannequin 3. Entre les bandes élastiques sont posés des matériaux de drainage 12 destinés à absorber l'excédent de colle pendant l'encollage sous vide d'air du bordé de la coque et à conduire l'air résiduel à l'extraction. Il peut s'agir par exemple de feutre ou de laine de verre.

La première coque destinée à servir ultérieurement de moule femelle 10, est ensuite formée sur cette surface tridimensionnelle. Le bordé est constitué de lattes de bois 8 (ou autre matériau) suffisamment fines pour épouser la forme définie par les bandes élastiques 6. L'espacement des bandes élastiques est choisi de sorte quelles définissent fiablement la forme de la coque; un espacement de 50 cm environ donne des résultats satisfaisants. Les lattes 8 sont éventuellement bouvetées sur leurs côtés afin de faciliter leur positionnement et d'augmenter la surface encollée entre elles. Elles peuvent également être usinées de sorte qu'elles s'emboîtent. On peut avantageusement réaliser la coque en utilisant la structure hybride, décrite dans le brevet français n°8708779, constituée de lattes de section sensiblement triangulaire et parallèlépipédique intercalées de lattes de mousse. En effet, cette structure offre d'excellentes caractéristiques mécaniques et esthétiques et facilite le montage du bordé. De plus, elle permet de varier les dimensions et sections des lattes et le rapport entre les poids des lattes et celui de la mousse selon la position sur la bordé.

Les lattes de bois 8 sont tenues sur les bandes 6 au moyen de rubans adhésifs double-face, par exemple. Dans le cas de zones où les lattes sont soumises à de fortes contraintes de flexion ou de torsion (notamment près de l'étrave), les lattes peuvent être agrafées sur un gabarit de bois 13 qui sera très précisément reproduit et positionné à chaque construction, ou même clouées provisoirement sur les bandes 6.

Une fois cette structure en place, elle est enduite de colle époxy et une bâche de plastique est posée dessus. Le bord de celle-ci est relié de façon étanche au bord du film intérieur, formant ainsi une poche fermée. L'air dans la poche est alors évacué à travers les pénétrations 5 dans le mannequin 3. La dépression atmosphérique, qui plaque la poche contre les lattes, est modulée en fonction de la structure.

Une fois la colle durcie, la bâche est enlevée et la surface des lattes 8 est lissée par ponçage. Cette phase est rapide car il s'agit simplement d'éliminer les excroissances de colle et les irrégularités visibles à l'oeil nu.

Sur cette surface poncée est collée de façon connue une stratification de résine époxy renforcée de fibres de verre, par exemple. Le choix de tissus, son poids et les orientations de ces fibres dépendent du type d'embarcation. Pendant que la résine reste visqueuse, la poche à vide est remise en place avec le drainage et la polymérisation de la résine se produit sous vide de façon classique.

La surface de ce stratifié est ensuite lissée avec soin, également de façon connue, par application de produits lissants suivie de ponçage. Enfin plusieurs couches de peinture assurent une parfaite finition.

Pour la construction de cette coque, il est primordial d'utiliser exactement les mêmes matériaux et techniques qui seront utilisés pour la production de coques de série. En particulier les dimensions de lattes et les quantités de résine et de tissus de verre devront être strictement les mêmes. Le respect de cette règle conditionne la qualité des coques fabriquées en série.

Sur cette première coque finie, on applique un produit de démoulage puis une stratification afin de réaliser un moulage de la coque. Ce moulage est avantageusement réalisé en résine époxy car celle-ci, de par sa grande résistance mécanique, donne une bonne rigidité au moule et par ailleurs ne présente aucun retrait. La polymérisation du moule femelle 10 est avantageusement réalisée sous vide d'air afin d'assurer un contact parfait entre le moule 10 et la première coque. Afin de faciliter la remise en place ultérieure de ce moule 10 sur le mannequin 3, il est avantageux d'intégrer dans sa structure des guides de centrage 9 solidaires du bâti supportant le mannequin 3, coopérant avec des pattes 9' du moule femelle 10.

Le moule femelle 10 ainsi formé est soulevé verticalement sur les guides 9 pour dégager la première coque qui est alors enlevée; elle ne servira plus dans le procédé selon l'invention.

Le moule femelle 10 en stratifié époxy, le mannequin mâle 3 muni de son film 4 de matériau étanche, et les bandes élastiques 6 constituent l'outil du procédé selon l'invention.

La fabrication de coques en série selon l'invention sera maintenant décrite, en quatre phases.

Phase 1 : Réalisation de la stratification externe.

Le moule femelle 10 est retourné, et son intérieur est soigneusement enduit de démoulant. Ensuite une couche de gel-coat et une couche plus épaisse de stratifié époxy sont posées dans le moule et polymérisées sous vide d'air. Un tissu dit "d'arrachage" est posé sur le stratifié avant la pose de la poche à vide. Il faut souligner combien il importe d'employer le même poids de stratifié que pour la première coque afin d'obtenir une stratification de la même épaisseur.

Phase 2 : Lattage du bordé.

Le lattage de la coque est monté sur le mannequin mâle 3 muni de son film étanche 4 et de ses bandes élastiques 6. Cette opération se fait de la même façon que pour la première coque. Une fois le lattage en place, le tissu d'arrachage dans le moule femelle est arraché du stratifié. La fonction de ce tissu, connue des professionnels, est d'assurer, une fois arraché, une surface très rugueuse permettant une bonne liaison mécanique d'une colle résineuse. Le moule femelle 10 est retourné et positionné en haut de ses guides 9.

Phases 3 : Assemblage.

Le lattage 8 est encollé et le moule 10 est abaissé sur cette structure, son positionnement étant assuré par les guides 9. Le bord du film 4 sur le mannequin 3 est rabattu sur le bord du moule 10 et y est attaché par un joint étanche sous forme de filet de mastic, formant ainsi une poche fermée. Une dépression est alors appliquée en évacuant l'air par des trous 5 prévus à cet effet dans le mannequin 3.

L'effet du vide est de plaquer la poche contre le lattage 8 qui se trouve soumis à une forte dépression contre la stratification à l'intérieur du moule femelle rigide. La souplesse du lattage 8 alliée à la force de compression, par exemple de l'ordre de 6 N/cm², soit 60 kPa, garantit le contact entre le lattage et le stratifié sur la surface intégrale du moule.

L'expérience montre que la mise en dépression peut se faire avantageusement par paliers. En effet, une mise sous compression progressive assure une parfaite répartition de la dépression à l'intérieur de la poche, ce qui se traduit par une meilleure évacuation de l'air des interstices du lattage et une meilleure répartition de colle dans cette structure. La lubrification des lattes par la colle permet de se déplacer légèrement les unes par rapport aux autres et améliore leur "plaquage" contre le moule.

A l'usage on constate que si la stratification du moule et le lattage du mannequin sont effectués avec soin et de la même manière que pour la première coque, le lattage et les bandes élastiques décollent à peine, de l'ordre de quelques millimètres, de la surface du mannequin. L'importance de ce "décollage" est une mesure de la différence entre la coque en cours de fabrication et la première coque.

Il est à noter que pendant l'application du vide, les bandes élastiques 6 ne jouent plus de rôle pour la forme de la coque, car celle-ci est déterminée à ce stade uniquement par le moule femelle 10.

Le film intérieur 4 est avantageusement réalisé en matériau élastique, par exemple en latex naturel : la très grande élasticité (700 % d'élongation possible avant rupture) de ce dernier lui permet de se plaquer uniformément contre le lattage 8. Avant l'application du vide, le latex épouse parfaitement la surface du mannequin 3 et présente une surface parfaitement lisse et exempte de plis, ce qui facilite la pose des bandes 6. En outre, les colles époxy n'adhèrent pas au latex, donc le film 4 reste propre après chaque collage.

Phase 4 : Démoulage.

Une fois la colle polymérisée, la dépression est coupée et la coque peut être démoulée. Cette opération s'effectue en soulevant le moule femelle 10 le long de ses guides 9 et en libérant les bandes 6, tenues jusqu'ici en légère extension par les ergots 7 plantés sur le bord inférieur du mannequin 3. La relaxation des bandes élastiques facilite la séparation du lattage 8 d'avec le ruban adhésif double-face.

Après démoulage, la surface extérieure de la coque est parfaite. Il reste à poncer les légères irrégularités du lattage intérieur et appliquer une couche de vernis époxy pour protéger le lattage 8. Selon le type d'embarcation, une couche de stratification (invisible une fois polymérisée) sera appliquée, sans utilisation du vide.

La description ci-dessus de l'application de l'invention à la construction d'une coque d'embarcation est donnée seulement à titre d'exemple, car le procédé décrit est applicable à la réalisation de nombreux produits en forme de surface développable ou non-développable. La seule limitation du procédé est liée aux rayons que peuvent suivre des lattes en matériaux dur. En effet, dans le cas de petits rayons, il est nécessaire de réduire la section des lattes. Par exemple, au niveau des extrémités de coque, étrave et tableau arrière, où la courbure se modifie fortement, on peut utiliser des gabarits supplémentaires transversaux positionnés sur le mannequin, sur lesquels on agrafe le lattage, ainsi que des poches à vides annexes permettant de réaliser les formes spécifiques dans ces régions.

La méthode s'adapte aisément à la fabrication de formes convexes (le bois formant la surface convexe, le stratifié formant la surface concave). Dans ce cas le mannequin est en forme de moule femelle et le moule femelle devient moule mâle.

## Revendications

1. Procédé de construction de panneaux composites, notamment gauches, constitués d'un lattage et d'une stratification à base de résine, caractérisé en ce qu'on utilise un moule en deux parties complémentaires (3, 10), on dispose le lattage (8) sur la première partie (3), on dispose la stratification sur la seconde partie (10), on encolle au moins l'une des deux parties, et l'on presse une partie sur l'autre sous vide d'air.

2. Procédé selon la revendication 1, caractérisé en ce qu'on forme le vide d'air entre d'une part une (10) des parties du moule et d'autre part un film étanche (4) couvrant l'autre (3) partie du moule, le film (4) étant raccordé de façon étanche aux bords de la partie du moule première nommée (10).

3. Procédé selon l'une quelconque des revendications 1 ou 2, caractérisé en ce qu'on dispose sur la première partie (3) du moule le lattage (8) de manière relativement souple.

4. Procédé selon l'une quelconque des revendications 1 à 3, caractérisé en ce qu'on l'applique à la construction de coques de bateaux.

5. Procédé selon la revendication 4, caractérisé en ce que la première partie de moule est formée par un mannequin (3) sur lequel est disposé le lattage (8).

6. Procédé selon l'une quelconque des revendications 4 ou 5, caractérisé en ce que la deuxième partie (10) de moule a été primitivement formée sur la première partie (3) de moule.

7. Procédé selon l'une quelconque des revendications 1 à 6, caractérisé en ce que le film étanche (4) est élastique.

8. Procédé selon l'une quelconque des revendications 1 à 7, caractérisé en ce qu'on procède à la mise sous vide par paliers.
